Europäisches Patentamt

(19) European Patent Office

Office européen des brevets

(11) Publication number: **0 260 154**
A2

## (12) EUROPEAN PATENT APPLICATION

(21) Application number: **87308080.8**

(22) Date of filing: **11.09.87**

(51) Int. Cl.⁴: **B 01 J 8/44**
C 08 F 2/34, C 08 F 10/00

(30) Priority: **12.09.86 JP 139429/86**

(43) Date of publication of application:
**16.03.88 Bulletin 88/11**

(84) Designated Contracting States:
**BE DE FR GB IT NL SE**

(71) Applicant: **TOA NENRYO KOGYO KABUSHIKI KAISHA**
**1-1 Hitotsubashi, 1-Chome Chiyoda-Ku**
**Tokyo 100 (JP)**

(72) Inventor: **Yamada, Hiroto**
**1060-6, Ooaza Kamekubo Ooi-machi**
**Iruma-gun Saitama-ken (JP)**

**Komiyama, Osamu**
**27-1, Uenocho 1-chome Naka-ku**
**Yokohama-shi Kanagawa-ken (JP)**

**Shibata, Masahisa**
**15-4-434, Hirado 1-chome Totsuka-ku**
**Yokohama-shi Kanagawa-ken (JP)**

**Mizakami, Haruo**
**73-6, Ooaza Higashifukai**
**Nagareyami-shi Chiba-ken (JP)**

(74) Representative: **Dew, Melvyn John et al**
**Exxon Chemical Limited Exxon Chemical Technology**
**Centre P.O. Box 1**
**Abingdon Oxfordshire, OX13 6BB (GB)**

(54) Gas dispersion plate for gas phase polymerization device.

(57) A gas dispersion plate adapted to be utilized in a gas phase polymerization device for providing uniform dispersion of gas includes a plate member (2) having a plurality of holes (11) extending therethrough, each of the holes having associated therewith a cap (12, 13, 14) adapted to move in response to gas pressure between a first position wherein the cap substantially covers the hole and a second position wherein the cap is spaced from the hole.

EP 0 260 154 A2

## Description

## GAS DISPERSION PLATE FOR GAS PHASE POLYMERIZATION DEVICE

This invention concerns a perforated plate for use in gas dispersion in a gas phase polymerization device for polymerization of olefins.

Polymerization reaction devices using the gas phase method have often been used heretofore. Recently, polymerization by means of the gas phase process has also been adapted in the polymerization of olefins along with the development of highly active catalysts.

In a gas phase polymerization device for polymerization of olefins, a vertical type fluidized bed reactor or lateral type stirring fluidized type reactor has been used and a dispersion plate having many holes for uniformly supplying a reactant gas is generally disposed adjacent the bottom of the reactor.

When a highly active catalyst is utilized, a high temperature region is locally formed or polymer particles coagulate into a mass since the polymerization reaction is initiated and progressed before the catalyst is uniformly dispersed in the fluidized bed. Further, if fine polymer powder containing the catalyst is entrained in the recycle gas stream, it causes polymerization in the gas recycle system and the resultant lump polymer adheres to the equipment or pipes in the gas recycle system and the holes of the gas dispersion plate to bring about a problem such as reduction in performance and plugging of the device.

Heretofore, several attempts have been made for overcoming disadvantages associated with the structure of the gas dispersion plate. For example, modifications to the dispersion plate include a distribution plate of a structure in which openings of the gas distribution plate are at first narrowed and then expanded in the direction of the gas flow (Japanese Patent Publication No. 882/66), a dispersion plate in which the opening hole in the gas blowing portion is formed as a tapered hole narrowed toward the upper side (Japanese Patent Application Laid Open No. 149304/82), a gas dispersion plate in which a trigonal cap is fixed so as to cover the hole (Japanese Patent Application Laid Open No. 154702/83), a gas dispersion plate of a structure in which a cap is attached to the hole, a partition wall is attached to the cap and the hole is divided to right and left by the partition wall or the hole is formed on both sides of the wall (Japanese Patent Application Laid Open No. 196205/83), a dispersion plate comprising a stationary dispersion plate and a movable dispersion plate (Japanese Patent Application Laid Open No. Sho 44905/86), etc.

However, even with these attempts, the foregoing problems have not yet been completely solved.

Accordingly it is desirable to provide a gas dispersion plate which does not generate a high temperature region locally in the lower portion of a formed fluidized bed, particularly, in the use of a highly active catalyst, does not cause a fine polymer powder containing a catalyst to entrain in the recycle gas flow and uniformly disperses the recycle gas for maintaining the polymer particles in a stationary fluidized state and maintaining a stationary layer of the polymer when recycle gas is not blown.

The subject invention is directed to a gas dispersion plate adapted to be utilized in a gas phase polymerization device for providing uniform dispersion of gas, said gas dispersion plate comprising a plate member having a plurality of holes extending therethrough, each of the holes having associated therewith cap means adapted to move in response to gas pressure between a first position wherein said cap means substantially covers the hole and a second position wherein said cap means is spaced from the hole.

The gas dispersion phase preferably includes a perforated plate in which the hole area of the perforated plate for use in gas dispersion is preferably from 0.1 to 10% and a movable cap capable of moving vertically by a blown gas is disposed to each hole in the perforated plate so as to cover the hole. That is, the preferred feature of the present invention lies in a perforated plate for use in gas dispersion disposed in a gas phase polymerization device, wherein the perforated plate has a hole area from 0.1 to 10% and a movable cap which is capable of vertically moving depending on the amount of the blow gas, is associated with each hole of the perforated plate so as to be adapted to cover the hole.

## BRIEF DESCRIPTION OF THE DRAWINGS

Figure 1 is a schematic view of a fluidized bed type gas phase polymerization device for olefins as one embodiment of a gas phase polymerization device in which a perforated gas dispersion plate according to the present invention is disposed.

Figure 2 is a plan view of a perforated gas dispersion plate in which caps are disposed partially,

Figure 3 is an enlarged cross sectional view for the portion of a hole in a perforated plate,

Figure 4 is an enlarged top view for the portion of the hole,

Figure 5 is an enlarged bottom view for the portion of the hole,

Figure 6 is a perspective view of the cap in Figures 3 through 5, and

Figures 7 and 8 are, respectively, perspective views for modified embodiments of the cap.

The present invention will now be exaplained referring to the drawings.

## DESCRIPTION OF THE PREFERRED EMBODIMENT

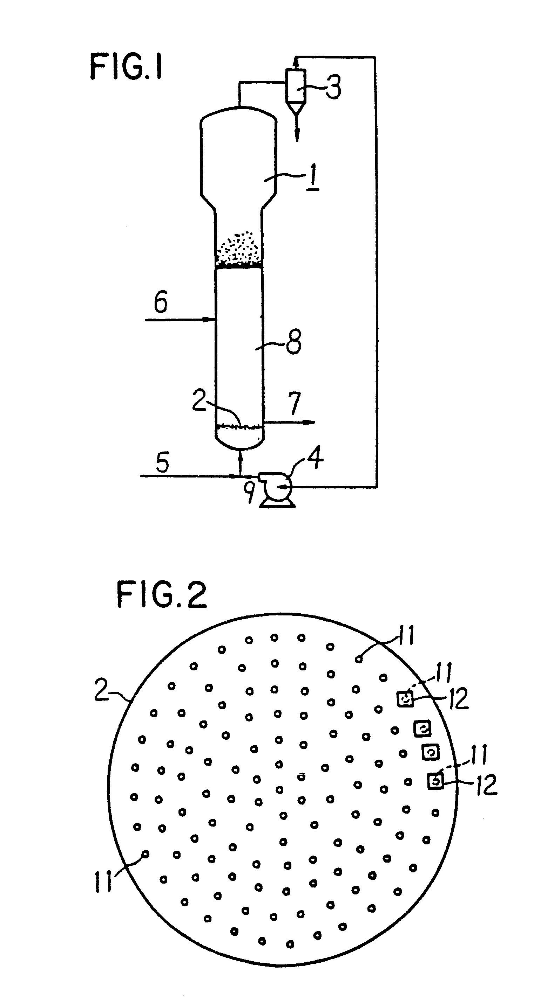

Figure 1 is a typical embodiment of a fluidized bed gas phase polymerization device for olefin. A polymerization reactor 1 having a perforated dispersion plate 2 disposed therein for uniformly dispersing and supplying a gas, is supplied with reactant olefin and, depending on the case, a molecular weight controlling reagent, a diluent through a pipe 5, a catalyst through a pipe 6 and, further, a recycle gas from a pipe 9 respectively, and the polymerization reaction is conducted in a fluidized bed formed therewith. The resultant polymer is discharged through a pipe 7, while unreacted olefin or other gases, after removal of fine polymer powder or catalyst contained therein by a separator 3, are pressurized in a compressor 4 and then recycled to the polymerization reactor 1.

The present invention concerns a structure for the dispersion plate 2. The dispersion plate 2, as shown in Figure 2, has a plurality of holes 11 extending through the dispersion plate 2 such that it has a hole area from 0.1 to 10%. It is desirable that the hole 11 is as small as possible in the diameter and disposed in plurality and uniformity so as to uniformly disperse and supply the reactant gas and the recycle gas. Hole size is usually determined from an overall point of view considering the gas pressure drop between the inlet and exit of the hole 11, gas linear velocity and, further, the desired percent of hole area.

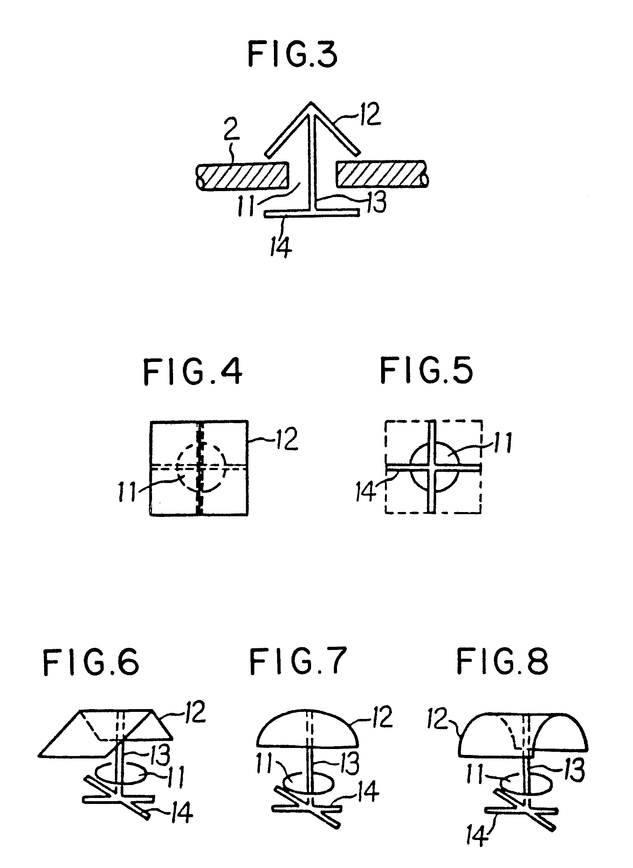

As shown in Figure 3, a cap 12 is associated with the hole 11 and formed so as to cover the hole 11. The cap 12 has a head 13 attached to one end thereof and has a smaller diameter than that of the hole 11 so as to be movable vertically depending on the amount of the uprising gas. When the gas stream is stopped, the cap 12 is brought into contact with the dispersion plate 2 and covers the hole 11. Further, the cap 12 has a leg 14 attached to the other end of the head 13 so as to be situated lower than the lower surface of the dispersion plate 2 such that the cap 12 may not be detached from the hole 11 by means of the uprising gas stream. The size of the cap 12 and that of the leg 14 attached thereto are greater than the diameter of the hole 11. Their details will be understood referring to Figures 4 through 6.

The cap 12 may be in the shape of a trigonal roof as shown in Figure 6, as well as a semi-spherical shape as shown in Figure 7 and a semi-cylindrical roof shape as shown in Figure 8. The leg 14 can be in any other shape than those shown in Figures 5 - 8 so long as it does not hinder the gas flow to the hole 11.

Although the dispersion plate according to the present invention is particularly effective, for example, for the fluidized bed gas phase polymerization of olefins as shown in Figure 1 and as a dispersion plate for use in a stirring type olefin gas phase polymerization device equipped with a dispersion plate, it is also suitable as a dispersion plate for other ordinary gas phase polymerization devices.

The perforated dispersion plate according to the present invention, when disposed particularly in a gas phase polymerization reaction device for olefins, can remarkably decrease the clogging due to adherence of the polymer particles to the holes of the perforated dispersion plate, thereby maintaining the gas flow in the fluidized bed uniformly and suppressing the local generation of a high temperature region due to the highly active catalyst in the fluidized bed, preventing the formation of lumps due to polymerization in the gas recycle system equipment or pipes thereby preventing the reduction of performance and the clogging.

## Claims

1. A gas dispersion plate adapted to be utilized in a gas phase polymerization device for providing uniform dispersion of gas, said gas dispersion plate comprising a plate member (2) having a plurality of holes (11) extending therethrough, each of the holes having associated therewith cap means (12, 13, 14) adapted to move in response to gas pressure between a first position wherein said cap means substantially covers the hole and a second position wherein said cap means is spaced from the hole.

2. A dispersion plate according claim 1 wherein said cap means includes a head portion (13) disposed in the hole and having a diameter less than the diameter of the hole and a length greater than the depth of the hole, a cap portion (12) attached to one end of said head portion, and a leg portion (14) attached to the other end of said head portion, said cap and leg portions each having a diameter greater than the diameter of the hole whereby said cap portion is adapted to substantially cover the hole when said cap means is in said first position and said leg portion is adapted to prevent movement of said cap means beyond said second position.

3. A dispersion plate according to claim 1 or 2 wherein the aggregate area of the holes of from 0.1 to 10 per cent of the area of the plate member.

4. A gas phase polymerization device which comprises a dispersion plate according to claim 1, 2 or 3.

5. A method of uniformly dispersing gas into a gas phase polymerization device according to claim 4 which comprises passing gas through the holes in the plate member at a pressure sufficient to move the cap means to said second position.

## FIG.1

## FIG.2

# FIG.3

# FIG.4

# FIG.5

# FIG.6

# FIG.7

# FIG.8